# EUROPEAN PATENT SPECIFICATION

(11) **EP 1 752 806 B1**
(45) Date of publication and mention of the grant of the patent: **11.02.2009**
(21) Application number: 06016738.4
(22) Date of filing: 10.08.2006
(51) Int. Cl.: G02B 7/10

(54) **Actuator and lens drive apparatus**
Einstellvorrichtung einer Linse und Antriebsgerät
Actionneur de lentille et dispositif d'entrainement

(30) Priority: 12.08.2005 JP 2005234643
(43) Date of publication of application: 14.02.2007
(73) Proprietor: Fujinon Corporation, Saitama-shi, Saitama (JP)
(72) Inventor: Sasaki, Ryota, Saitama-shi Saitama (JP)
(74) Representative: Klunker, Hans-Friedrich

(56) References cited:
- EP-A- 1 708 287
- US-A1- 2003 168 940
- US-A1- 2004 012 304

## Description

### FIELD OF THE INVENTION

The present invention relates to actuators, and more particularly to an actuator that is to be mounted on a small-sized precision apparatus, such as a digital camera or a cellular phone, and for driving a zoom lens.

### BACKGROUND OF THE INVENTION

There is an actuator using a piezoelectric element as a driver for a lens unit of a digital camera or the like. For example, the actuator in Japanese Patent No. 2,633,066 has a piezoelectric element whose one end is secured to a drive shaft while the other end is fixed to an apparatus body. On the drive shaft, a lens barrel is slidably supported. The lens barrel is frictionally engaged with the drive shaft through utilization of a biasing force of a leaf spring. A drive pulse nearly in a saw-tooth form is applied to the piezoelectric element, to cause a deformation in the piezoelectric element at a rate different between an expansion and contraction directions thereof. For example, in case the piezoelectric element deforms moderately, the lens barrel moves together with the drive shaft. Conversely, when the piezoelectric element deforms fast, the lens barrel stays in the same position due to the inertia of the mass thereof. Consequently, by repetitively applying to the piezoelectric element a drive pulse nearly in a saw-tooth waveform, the lens barrel can be moved intermittently at a fine pitch.

However, in the actuator of the background art, its frictional force between the driven member and the driving member is unstable. The driven member is not allowed to move at a stable rate and thrust.

As a method to resolve this issue, it can be considered to interpose a slide member, for obtaining a stable slide resistance, between the driving and driven members. US 2003/0168940 A1 discloses an actuator including a drive shaft at one end of a vibrating piezoelectric element. A driven member is frictionally held by clamping the movable drive shaft between a slide member provided at one end of the driven member and a second slide member in the form of a cap urged radially of the actuator by a biasing unit in the form of a leaf spring formed of a resilient body. However, in such a case, the components increase in the number corresponding to the slide member, thus lowering in assembling efficiency and increasing in cost. Furthermore, when a slide member is provided, there is a possibility the slide member deviate in position during driving the actuator. This results in that the slide resistance is changed to make the moving rate and thrust of the driven member unstable.

### SUMMARY OF THE INVENTION

An object of an illustrative, non-limiting embodiment of the invention is to provide an actuator capable of performing a drive control with stability, in which the number of components can be reduced.
(1) An actuator according to one aspect of the invention includes: an electro-mechanical conversion element; a frictional drive shaft attached at one end of the electro-mechanical conversion element with respect to a direction of expansion and contraction of the electro-mechanical conversion element; a driven member frictionally engaged with and thereby driven by the frictional drive shaft; and a biasing unit attached to the driven member and biasing the driven member and the frictional drive shaft in a direction of engagement thereof, wherein the biasing unit includes at least two slide members sliding over the frictional drive shaft the at least two slide members being integrally formed with the biasing unit, and the frictional drive shaft and the driven member are frictionally engaged with each other through the at least two slide members, the at least two slide members sandwiching and holding the frictional drive shaft therebetween.
   According to the actuator of the above (1), because the biasing unit includes the slide members to slide over the frictional drive shaft, there is no need to provide a slide member separately. This can reduce the number of components and improve the assembling efficiency, further diminishing the cost. Meanwhile, in the actuator of the above (1), because the slide members are integrally formed with the biasing unit, the slide members do not deviate in position. Therefore, the frictional force (slide resistance) between the frictional drive shaft and the driven member can be kept nearly constant, thus effecting a drive control with stability.
   The actuator of the above (1) can suppress the slide resistance from changing because the frictional drive shaft is sandwiched and held by the slide members of the biasing unit. Accordingly, drive control can be effected with stability.
(2) The actuator according to the above (1), wherein the driven member is attached with a support frame of a zoom lens.

In an actuator according to one aspect of the invention, the biasing unit includes slide members with a frictional drive shaft, thus eliminating the need to provide a slide member separately. Thus, the assembling efficiency can be improved with a reduced number of components while diminishing the cost. Furthermore, the slide member can be prevented from deviating in position to make the frictional force instable, thus effecting a drive control with stability.

### BRIEF DESCRIPTION OF THE DRAWINGS

Fig. 1 is a perspective view showing a lens apparatus to which applied is an actuator according to an exemplary embodiment of the present invention.
Fig. 2 is a perspective view showing an interior construction of the lens apparatus in Fig. 1.
Fig. 3 is a perspective view of the lens apparatus as viewed in the different direction from Fig. 2.
Fig. 4 is a perspective view showing a construction of an actuator.
Fig. 5 is a sectional view showing a connection between the drive shaft and the coupling piece.
Fig. 6A and 6B are figures showing examples of a voltage drive pulse to be applied to a piezoelectric element.
Fig. 7 is a sectional view showing a connection of an actuator in a comparative example.

### DETAILED DESCRIPTION OF THE INVENTION

With reference to the accompanying drawings, description is now made in detail on an exemplary embodiment of an actuator according to the present invention.

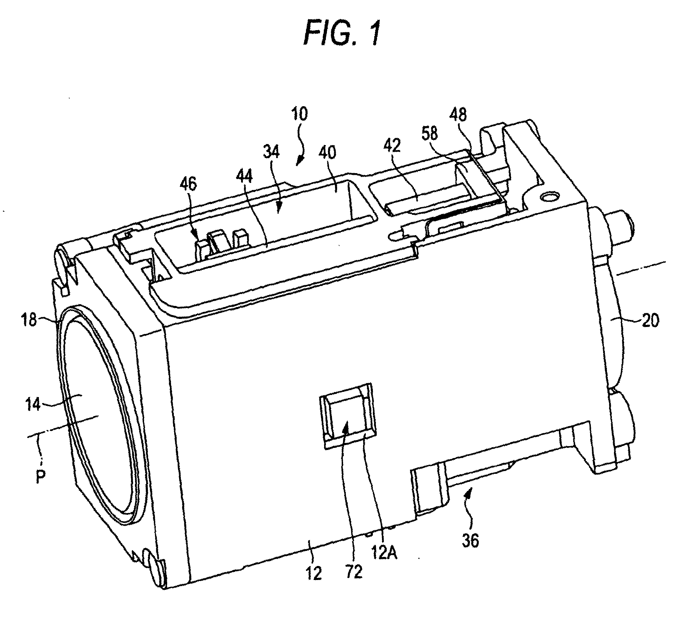

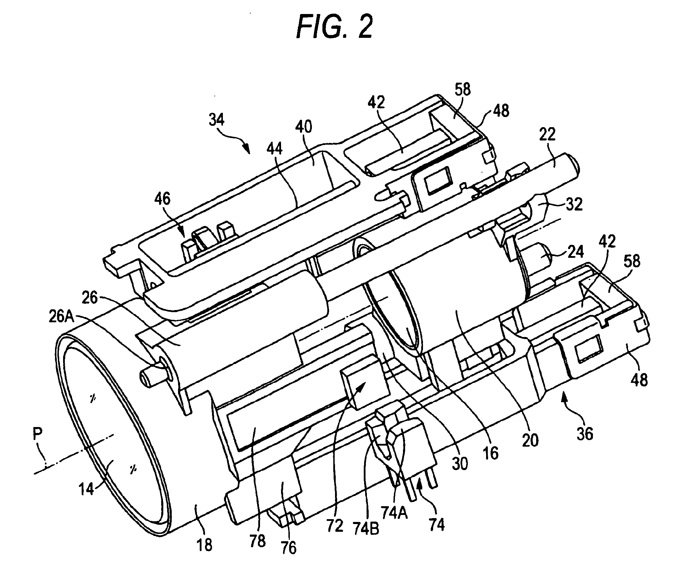

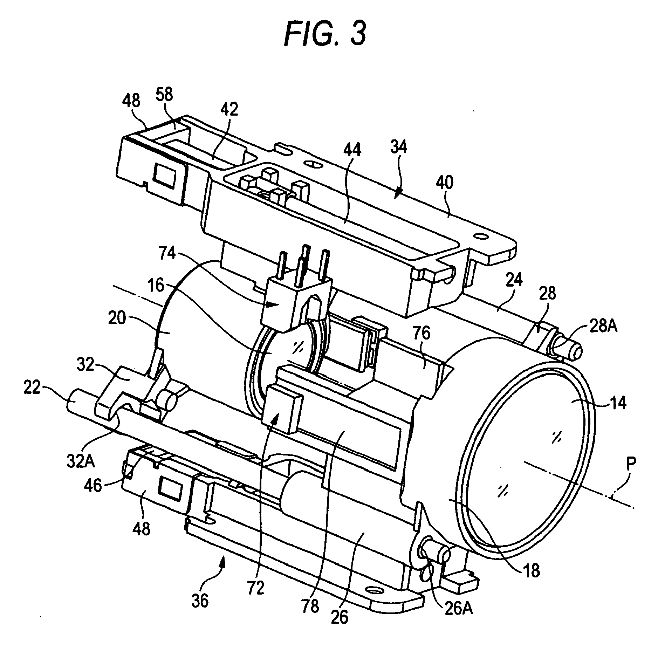

Fig. 1 is a perspective view showing a lens apparatus 10 to which is applied an actuator according to an aspect of the invention. Figs. 2 and 3 are perspective views showing an internal arrangement of the same.

As shown in Fig. 1, the lens apparatus 10 has a body 12 formed nearly rectangular in form. The body 12 has therein zoom lenses (groups) 14, 16 that are shown in Figs. 2 and 3. Of the zoom lenses (groups) 14, 16, one is provided as a variable power lens while the other is as a correction lens. The zoom lenses (groups) 14, 16 are respectively held in support frames 18, 20. The support frames 18, 20 are supported slidable in the direction of an optical axis P by two guide rods 22, 24. The two guide rods 22, 24 are arranged diagonal in the body 12 and parallel with the optical axis P, thus being fixed on the body 12.

The support frame 18 has a guide 26 having a bore in which the guide rod 22 is inserted and a U-groove 28A with which the guide rod 24 is engaged. Due to this, the guide frame 18 is to be guided over the two guide rods 22, 24 so that the zoom lens (group) 14 can be held movable in the direction of the optical-axis P. Likewise, the support frame 20 for the zoom lens 16 has a guide 30 having an insert bore (not shown) in which the guide rod 24 is inserted and an engager 32 having a U-groove 32A with which the guide rod 22 is engaged. Due to this, the guide frame 20 is to be guided over the two guide rods 22, 24 so that the zoom lens (group) 16 can be held movable in the direction of the optical-axis P.

The zoom lenses (groups) 14, 16 are driven in the direction of the optical-axis P respectively by the actuators 34, 36. The actuators 34, 36 are arranged on the opposite surfaces of the body 12. Specifically, the actuator 34 for the zoom lens (group) 14 is arranged on the top surface of the Fig. 1 body 12 while the actuator 36 for the zoom lens (group) 16 is on the bottom surface of the body 12. The explanation in the following is on the actuator 34, which is the case with the actuator 36.

Incidentally, reference numerals 72, 74 in Figs. 1 to 3 designate position detectors which are to detect a position of the support frame 18, 20. The position detector 72, or reflective photo-interrupter, is arranged opposite to a plate-like reflector unit 78 integrally formed with the support frame 18 (or the support frame 20) so that it can be fixedly received in an aperture 12A of the body 12 (see Fig. 1). In the reflector unit 78, a plurality of reflectors (not shown) are arranged at a constant interval in the drive direction. Consequently, by receiving the reflection of the light emitted from the position detector 72 to the reflector unit 78 and detecting a change in the amount of that light, it is possible to detect a moving amount of the reflector unit 78 (i.e. support frame 18, 20). Meanwhile, the position detector 74 has a light emitter 74A and a light receiver 74B. Between the light emitter 74A and the light receiver 74B, a plate-like shade 76 is to be inserted which is integrally formed with the support frame 18 (or support frame 20). Consequently, due to an insertion of the shade 76 between the light emitter 74A and the light receiver 74B, the light receiver 74B is to receive a changing amount of light. This makes it possible to detect a fact the shade 76 (i.e. support frame 18, 20) has moved to a predetermined point. In this manner, the position detector 74 detects a reference position of the support frame 18, 20 while the position detector 72 detects a moving amount of the support frame 18, 20, making it possible to determine a position of the support frame 18, 20 correctly. The actuators 34, 36 are controlled and driven depending upon the value as measured by the position detector 72, 74.

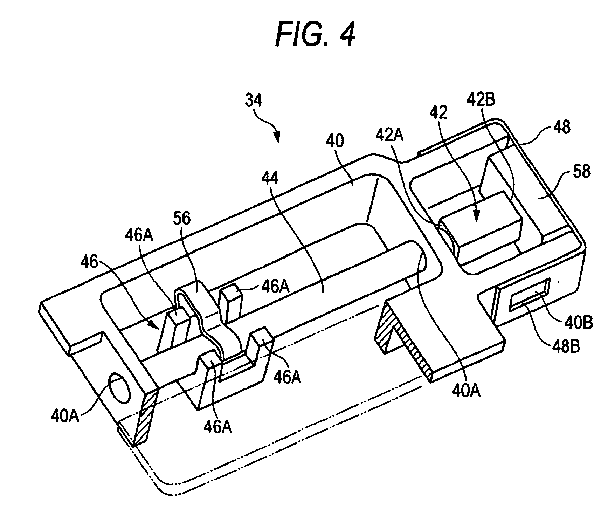

Fig. 4 is a perspective view showing an arrangement of the actuator 34. As shown in the figure, the actuator 34 is mainly constructed with a fixed frame 40, a piezoelectric element (corresponding to an electro-mechanical conversion element) 42, a drive shaft (corresponding to a frictional drive shaft) 44, a coupling piece (corresponding to a driven member) 46 and a fixture 48. The fixed frame 40 is secured to the body 12 for the Fig. 1 lens apparatus 10.

The piezoelectric element 42 is formed laminated in the direction of the optical-axis P (hereinafter referred to as a drive direction), thus being structured to deform (expand and contract) in the drive direction due to the application of voltage. Accordingly, by applying a voltage to the piezoelectric element 42, its lengthwise end faces 42A, 42B make a displacement in the drive direction.

Of the end faces 42A, 42B of the piezoelectric element 42, one end face 42A is secured to a base of the drive shaft 44 while the other end face 42B is fixed, by bonding, to a weight member 58 formed of non-rigid material.

The weight member 58 is to impart a load to the end face 42B, thereby preventing the displacement of the end face 42B greater than that of the end face 42A. Accordingly, the weight member 58 is preferably greater in weight than the drive shaft 44. The weight member 58 uses a material smaller in Young's modulus than the piezoelectric element 42 and drive shaft 44, e.g. structured of a material having 300 MPa or smaller. For example, the weight member 58 is formed of a urethane rubber, a urethane resin or the like, and made by mixing such a rubber or resin with a metal powder, such as of tungsten, in order to raise the specific gravity. The specific gravity of the weight member 58 is preferably as high as possible for the sake of size reduction, e.g. set at 8 - 12 or the around.

The weight member 58 is bonded to the fixture 48, at a side opposite to the piezoelectric element 42. The fixture 48 is formed by bending a metal sheet into a squared-U form, thus being formed with apertures 48B in its bent regions at both ends. The fixture 48 is attached to the fixed frame 40 by being fitted at the apertures 48B over the projections 40B of the fixed frame 40. Due to this, the piezoelectric element 42 is held in the fixed frame 40 through the weight member 58 and fixture 48.

The piezoelectric element 42 is held displaceable at its end face 42B in the drive direction. Namely, the end face 42B of the piezoelectric element 42 is allowed to displace through an expansion and contraction of the non-rigid weight member 58 or a deflection of the fixture 48.

Meanwhile, the drive shaft 44, secured to the end face 42A of the piezoelectric element 42, is formed in a circular-cylinder form and arranged to have an axis thereof aligned in the drive direction. The drive shaft 44 is inserted in and guided by two bores 40A, 40A formed in the fixed frame 40, thus being supported slidable in the axial direction. The drive shaft 44 uses, as a material, graphite crystal complex that graphite crystal is firmly combined together, e.g. carbon graphite.

As shown in Fig. 4, the drive shaft 44 is engaged with the coupling piece 46. The coupling piece 46 is connected to the support frame 18 of the zoom lens 14 so that it can be supported to slide together with the support frame 18 in the direction of the optical-axis P (in the drive direction). Meanwhile, the coupling piece 46 is formed in a rectangular-parallelepiped form to have projections 46A, 46A protruding upward at four corners thereof.

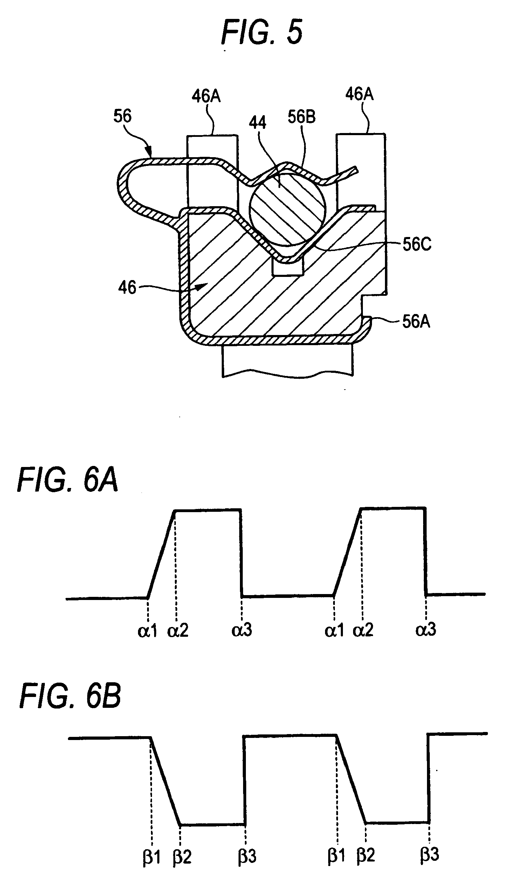

Fig. 5 is a sectional view of a connection between the coupling piece 46 and the drive shaft 44. As shown in the figure, a pressure spring 56 is attached on the coupling piece 46. The pressure spring 56 is formed by bending a metal sheet well in slidability, e.g. stainless steel, and attached on the coupling piece 46 by engaging the claw 56A in the lower portion of the coupling piece 46. Meanwhile, the pressure spring 56 has a first slide member 56B arranged above the drive shaft 44 and a second slide member 56C arranged below the drive shaft 44. The first slide member 56B is formed in an inverted-V form while the second slide member 56C is in a V-form so that the drive shaft 44 can be clamped by the first and second slide members 56B, 56C. This provides a frictional engagement between the coupling piece 46 and the drive shaft 44 through the first and second slide members 56B, 56C of the pressure spring 56. Incidentally, the frictional force between the coupling piece 46 and the drive shaft 44 is established greater than a drive force caused upon applying a drive pulse with a moderate voltage change to the piezoelectric element 42 but smaller than a drive force caused upon applying a drive pulse with an abrupt voltage change to the piezoelectric element 42. In such a case, the frictional force (slide resistance) is preferably of from 10 gf to 30 gf, more preferably from 15 gf to 25 gf.

A drive pulse voltage, shown in Figs. 6A and 6B, is applied to the piezoelectric element 42. Fig. 6A depicts a drive pulse for driving the Fig. 4 coupling piece 46 toward the left while Fig. 6B a drive pulse for driving the Fig. 4 coupling piece 46 toward the right.

In the case of Fig. 6A, applied to the piezoelectric pulse 42 is a drive pulse nearly in a saw-tooth form that rises moderately at time from α1 to α2 and abruptly falls at time α3. Accordingly, the piezoelectric element 42 expands moderately in time of α1 to α2. In this duration, because the drive shaft 44 moves at a moderate rate, the coupling piece 46 moves together with the drive shaft 44. This can move the Fig. 4 coupling piece 46 toward the left. At time α3, the piezoelectric element 42 contracts abruptly, and accordingly the drive shaft 44 moves toward the right. In this duration, because of an abrupt movement of the drive shaft 44, only the drive shaft 44 moves while the coupling piece 46 stays in the position due to its inertia. Accordingly, by repetitively applying the saw-tooth drive pulse shown in Fig. 6A, the Fig. 4 coupling piece 46 repeats the leftward movement and rest, thus being moved toward the left.

In the case of Fig. 6B, applied to the piezoelectric pulse 42 is a drive pulse nearly in a saw-tooth form that falls moderately at time from β1 to β2 and abruptly rises at time β3. Accordingly, the piezoelectric element 42 contracts moderately in time of β1 to β2. In this duration, because the drive shaft 44 displaces moderately, the coupling piece 46 moves together with the drive shaft 44. This can move the Fig. 4 coupling piece 46 toward the right. At time β3, the piezoelectric element 42 expands abruptly, and accordingly the drive shaft 44 moves toward the left. In this duration, because of an abrupt movement of the drive shaft 44, only the drive shaft 44 moves while the coupling piece 46 stays in the position due to its inertia. Accordingly, by repetitively applying the saw-tooth drive pulse shown in Fig. 6B, the Fig. 4 coupling piece 46 repeats the rightward movement and rest, thus being moved toward the right.

The operation of the actuator 34 thus constructed is now explained.

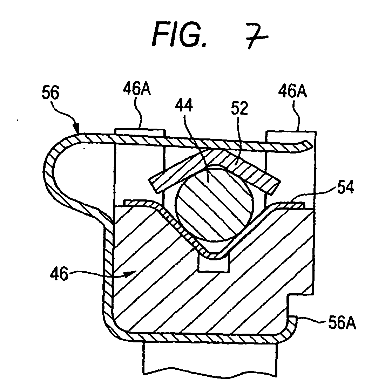

Fig. 7 is an actuator as a comparative example, showing a section taken of its drive shaft 44 and coupling piece 46. In the comparative-example actuator shown in the figure, there are provided first and second slide members 52, 54 as separate members from the pressure spring 56. Namely, the first slide member 52 is provided above the drive shaft 44 while the second drive member 54 is below the same wherein the first and second slide members 52, 54 are frictionally engaged over the drive shaft by pushing the first slide member 52 downward by means of the pressure spring 56. The actuator thus structured involves a problem that, when the coupling piece 46 is moved along the drive shaft 44, the first and second slide members 52, 54 tend to deviate in position thus making the frictional force instable. Meanwhile, because of the necessity to assemble the first and second slide members 52, 54 separately from the pressure spring 56, there is a problem of poor assembling efficiency.

On the contrary, in the actuator 34 shown in Fig. 5 embodiment, the pressure spring 56 has the first and second slide members 56B, 56C wherein the pressure spring 56 serves as both biasing means and a slide member. This eliminates the need of separately providing a slide member, thus making it possible to reduce the number of components and improve the efficiency of assembling, thus reducing the cost.

Meanwhile, the embodiment provided the first and second slide members 56B, 56C in the pressure spring 56, which pressure spring 56 is fixed on the coupling piece 46. There is no fear that the first and second slide members 56B, 56C deviate in position to cause a change in the frictional force. Accordingly, the frictional force between the drive shaft 44 and the coupling piece 46 can be kept nearly constant, thus enabling a drive control with stability. Particularly, the embodiment clamped the drive shaft 44 by means of the first and second drive shaft 56B, 56C, hence obtaining a frictional force nearly constant at all times and effecting a drive control with stability.

Incidentally, the embodiment provided the first and second slide members 56B, 56C both in the pressure spring 56.

Meanwhile, the embodiment formed the first and second slide members 56B, 56C of the pressure spring 56 in an inverted-V or V form. However, this is not limitative but those may be formed in such an arcuate form as placed in plane-contact with the drive shaft 44.

Incidentally, the material of the weight member 58 is not limited to the non-rigid material mentioned before but may use a rigid material. However, the use of a non-rigid material is preferred in respect of the following point. Namely, the use of a weight member 58 of a non-rigid material lowers the resonant frequency of a system formed by the piezoelectric element 42, the driving frictional member 44 and the weight member 58. The lowering in the resonant frequency reduces the effect due to the variation in the structure of the piezoelectric element 42, the driving frictional member 44 and the weight member 58, thus obtaining a stable drive force. Meanwhile, by lowering the resonant frequency f₀, drive frequency f can be easily set within an anti-vibrating region of f ≥ 2^{1/2} · f₀ wherein the effect of resonance is reduced to provide a stable drive force. This can positively convey, to the driven member, the drive force caused by an expansion and contraction of the piezoelectric element 42, thus correctly moving the driven member in the direction of expansion and contraction of the piezoelectric element 42. Furthermore, because the resonant frequency f₀ is decreased to reduce the effect of resonance, actuator-support position and method can be desirably selected. For example, the actuator can be held on the end face 42A or side surface of the piezoelectric element 42 or on the side surface or end face of the drive shaft 44.

It will be apparent to those skilled in the art that various modifications and variations can be made to the described embodiments of the invention without departing from the spirit or scope of the invention. Thus, it is intended that the invention cover all modifications and variations of this invention consistent with the scope of the appended claims and their equivalents.

The present application claims foreign priority based on Japanese Patent Application No. 2005-234643 filed August 12 of 2005, the contents of which are incorporated herein by reference.

## Claims

1. An actuator (34) comprising:
an electro-mechanical conversion element (42);
a frictional drive shaft (44) attached at one end of the electro-mechanical conversion element (42) with respect to a direction of expansion and contraction of the electro-mechanical conversion element (42);
a driven member (46) frictionally engaged with and thereby driven by the frictional drive shaft (44); and
a biasing unit (56) attached to the driven member (46) and biasing the driven member (46) and the
frictional drive shaft (44) in a direction of engagement thereof, **characterized in that** the biasing unit (56) comprises at least two slide members (56B, 56C) sliding over the frictional drive shaft (44) the at least two slide members (56B,56C) being integrally formed with the biasing unit (56) and the frictional drive shaft (44) and the driven member (46) are frictionally engaged with each other through the at least two slide members (56B;56C) the at least two slide members (56B;56C) sandwiching and holding the frictional drive shaft (44) therebetween.

2. The actuator (34) according to claim 1, wherein the driven member (46) is attached with a support frame (18;20) of a zoom lens (14;16).

3. A lens drive apparatus (10) comprising an actuator (34) according to claim 1.

## Patentansprüche

1. Aktuator (34) umfassend:
ein elektromagnetisches Umsetzungselement (42);
eine Reibungs-Antriebs-Welle (44), welche bezüglich einer Expansions- und Kontraktionsrichtung des elektromechanischen Umsetzungselementes (42) an einem Ende des elektromechanischen Umsetzungselementes (42) angebracht ist;
ein angetriebenes Glied (46), welches mit der Reibungs-Antriebs-Welle (44) reibschlüssig in Eingriff steht und dadurch angetrieben wird; und
eine Vorspanneinheit (56), welche an dem angetriebenen Glied (46) angebracht ist und das angetriebene Glied (46) und die Reibungs-Antriebs-Welle (44) in einer Eingriffsrichtung desselben vorspannt,
**dadurch gekennzeichnet, dass**
die Vorspanneinheit (46) zumindest zwei Gleitglieder (56B, 56C) umfasst, welche über die Reibungs-Antriebs-Wellen (44) gleiten, wobei die zumindest zwei Gleitglieder (56B, 56C) einstückig mit der Vorspanneinheit (56) ausgebildet sind, und dass die Reibungs-Antriebs-Welle (44) und das angetriebene Glied (46) über die zumindest zwei Gleitglieder (56B, 56C) miteinander reibschlüssig in Eingriff stehen, wobei die zumindest zwei Gleitglieder (56B, 56C) die Reibungs-Antriebs-Welle (44) umgeben und dazwischen halten.

2. Aktuator (34) nach Anspruch 1, wobei das angetriebene Glied (46) mit einer Trägerrahmen (18, 20) einer Zoom-Linse (14, 16) verbunden ist.

3. Linsenantriebsvorrichtung (10) umfassend einen Aktuator (34) nach Anspruch 1.

## Revendications

1. Actionneur (34) comprenant :
un élément de conversion électromécanique (42) ;
une tige d'entraînement par friction (44) fixée sur une extrémité de l'élément de conversion électromécanique (42) par rapport à une direction d'expansion et de contraction de l'élément de conversion électromécanique (42) ;
un élément entraîné (46) en prise par friction avec la tige d'entraînement par friction (44), et de ce fait entraîné par celle-ci, et
une unité de prétension (56) fixée à l'élément entraîné (46) et tendant l'élément entraîné (46) et la tige d'entraînement par friction (44) dans une direction de prise de celle-ci, **caractérisé en ce que** l'unité de prétension (56) comprend au moins deux éléments coulissants (56B ; 56C), coulissant sur la tige d'entraînement par friction (44), les au moins deux éléments coulissants (56B ; 56C) étant formés d'un seul tenant avec l'unité de prétension (56), et **en ce que** la tige d'entraînement par friction (44) ainsi que l'élément entraîné (46) sont en prise par friction l'un avec l'autre par le biais des au moins deux éléments coulissants (56B ; 56C), les au moins deux éléments coulissants (56B ; 56) prenant en sandwich et maintenant la tige d'entraînement par friction (44) entre eux.

2. Actionneur (34) selon la revendication1, dans lequel l'élément entraîné (46) est fixé à un cadre de support (18,20) d'un objectif à focale variable (14 ; 16).

3. Appareil d'entraînement d'objectif (10) comprenant un actionneur (34) selon la revendication 1.
